# EUROPEAN PATENT SPECIFICATION

(11) **EP 0 580 195 B1**
(45) Date of publication and mention of the grant of the patent: **11.12.1996**
(21) Application number: 93201731.2
(22) Date of filing: 16.06.1993
(51) Int. Cl.: F16L 37/48

(54) **Adapter for connecting a hose to a tap**
Adapter zur Verbindung eines Schlauches mit einem Zapfhahn
Adapteur pour connecter un tuyau à un robinet

(30) Priority: 22.06.1992 IT MI920626 U
(43) Date of publication of application: 26.01.1994
(73) Proprietor: CLABER S.P.A., I-33080 Fiume Veneto Pordenone (IT)
(72) Inventor: Roman, Gianfranco, I-33087 Pasiano (Pordenone) (IT)
(74) Representative: Mittler, Enrico

(56) References cited:
- DE-C- 546 057
- FR-A- 845 766
- GB-A- 238 767
- GB-A- 1 325 282
- GB-A- 2 118 262
- US-A- 2 650 838
- US-A- 4 660 803

## Description

The present invention relates to an adapter for connecting an irrigation hose to a water tap outlet.

For water connection between irrigation hoses and water outlets devices are known that are constituted by two distinct and connectable coupling elements, of which the first, or female coupling element, makes the connection with the irrigation hose, the second, or male coupling element, makes the connection with the water outlet. The connection between the two coupling elements is made with different techniques, generally based on the use of snap-on connecting means.

The specific features of the known devices for connecting the irrigation hose to the water outlet depend to a large extent on the features of the water outlet with which the connection is to be made, especially as regards the male coupling element.

The female coupling element, whose shape is frequently standard, is generally constituted by a hollow plastic structure with a cylindrical shape, provided at one end with means for connecting and fastening to the hose, at the other end with means for coupling with the male coupling element.

The shape and the size of the male coupling element are, on the other hand, more closely dependent on the specific shape of the water outlet to which the irrigation hose is to be connected.

Very often the water outlet is constituted by a hollow metal arm, terminating with an externally threaded delivery mouth; in such case the male coupling element is constituted by an internally threaded plastic ring to be applied by screwing it onto said threaded mouth and endowed with a lower drilled tang, provided with a seal and shaped externally so as to ensure the snap-on coupling with the female coupling element.

In the case where the water outlet does not have a thread on the terminal delivery mouth, the connection with the water outlet is ensured by an annular-shaped male coupling element, that can be fitted externally onto the mouth of the water outlet and fastened to the same with an external ring nut. In this case as well the male coupling element is provided with a lower drilled tang, provided with a seal and shaped externally so as to ensure the snap-on coupling with the female coupling element.

The case should lastly be considered wherein the water outlet is a home tap unit for ceramic wash-basins and sinks, generally constituted by a hollow metal arm, fixed at one end to the ceramic part of the wash-basin, and curved so that the delivery mouth is arranged in a vertical position.

For that type of water outlet, male coupling elements are known that are constituted by a support casing in the shape of a hollow cylinder, provided with a wide transversal hole, that defines a space for receiving the terminal part of the metal arm of the tap unit. The lower base of said cylindrical casing has a drilled vertical tang provided with an annular seal to be placed at the outlet mouth of the tap unit; the upper base is, on the other hand, provided with a clamping means constituted by a screw-on cover, whose displacements determine a variation in the height of the space for receiving the arm of the tap unit.

Once the terminal part of the arm of the tap unit has been inserted in the receiving space so that the delivery mouth of the tap unit itself coincides with the abovementioned annular seal, it is then possible to fasten the male coupling element to said arm by operating on the screw-on cover until a sufficient reduction in the height of the abovementioned receiving space has been obtained. The connection with the female coupling element is ensured by the presence of the drilled vertical tang, whose external shape is selected so as to allow the snap-on connection of a usual female coupling element.

The main drawback of such a technique is constituted by the fact that the screw-on blocking of the male coupling element onto the tap unit often does not guarantee the complete immobility of the connecting element, in particular for long irrigation periods, with consequent negative effects on the hydraulic seal of the connection between the mouth of the tap unit and the internal seal of the coupling element.

US-A-2650838 discloses a faucet connector according to the preamble of claim 1. The connector includes a seat adapted to bear against a faucet mouth and an eccentric lever having a pivot pin on a pad resting on the faucet top and reacting against a work arm linkedly connected with said seat and movable parallelly to the axis of the faucet mouth against a spring to clamp the seat against the faucet mouth.

FR-A-845766 shows tangs having their height adjustable by turning the tang in a screw thread, thereby producing a clamping action.

The object of the present invention is to provide an adapter for connecting an irrigation hose to a water tap outlet, that has a reliable clamping system and a consequent perfect hydraulic seal and that, at the same time, is sufficiently versatile so that it can be used for tap units of different sizes.

According to the invention such object is attained by means of an adapter as defined in claim 1.

It appears evident that in this way an adapter is obtained that has the advantage of ensuring a perfect mechanical and hydraulic seal and, thanks to the adjustability of the screw-on structure, of being sufficiently versatile to be adaptable to different sizes of the water outlet.

These and other features of the present invention shall be made more evident through the following detailed description of one of its embodiments, illustrated as a non-limiting example in the following drawings, wherein:

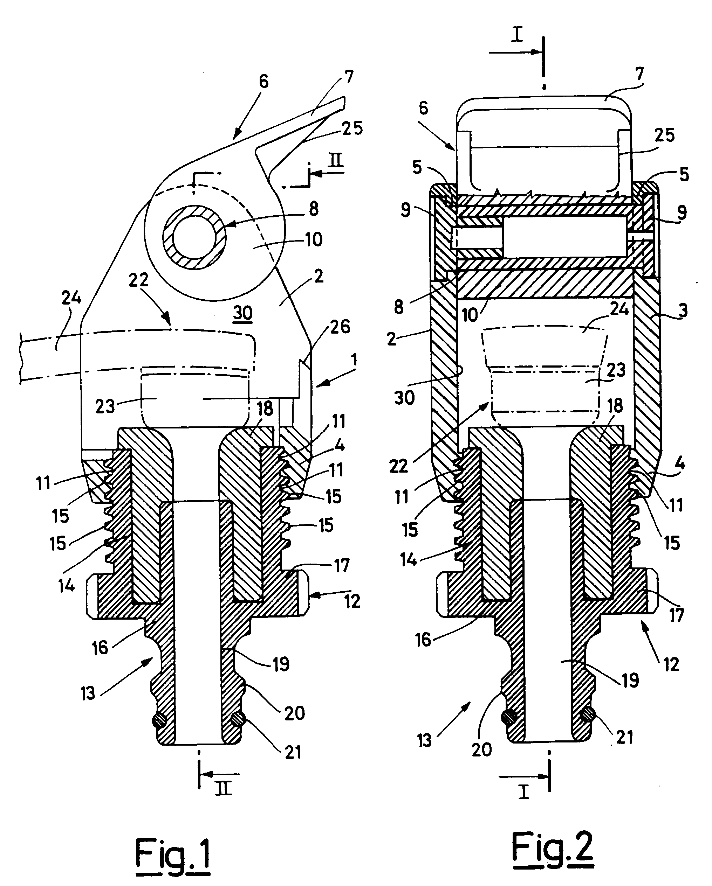

Fig. 1 shows an adapter according to the invention, in open position, sectioned along the line I-I of Fig. 2;
Fig. 2 shows a cross-sectional view of said adapter taken along the line II-II of Fig. 1;
Fig. 3 shows the same cross-sectional view of Fig. 1 in closed position;
Fig. 4 shows the same cross-sectional view of Fig. 2 in closed position.

With reference to Fig.s 1 and 2, the adapter according to the invention comprises a hollow support casing 1, constituted by two lateral surfaces 2, 3, arranged parallel to one another and connected at the bottom by a surface 4 perpendicular to them. Said surface 4 is provided with a circular hole endowed with an internal thread 11.

Said support casing 1 defines a space 30 for receiving the terminal part of the water delivery arm 24 of a top unit 22.

In the upper part the two surfaces 2, 3 have two holes 5 of a circular shape, in specular positions; in said holes 5 there is inserted a pin 8, that has the shape of a hollow cylinder and, on the terminal bases, is provided with supports 9 that, having a radius greater than that of the holes 5, allow said pin 8 to be fastened to the lateral surfaces 2 and 3.

Said pin 8 constitutes, in addition to an upper connecting element between the two lateral surfaces 2, 3, the axis of rotation for an upper clamping element 6 of the adapter.

Said clamping element 6 is constituted by a drum 10 having an eccentric shape, rotatable on said pin 8 and provided with a tab 7 that allows the same drum 10 to be moved.

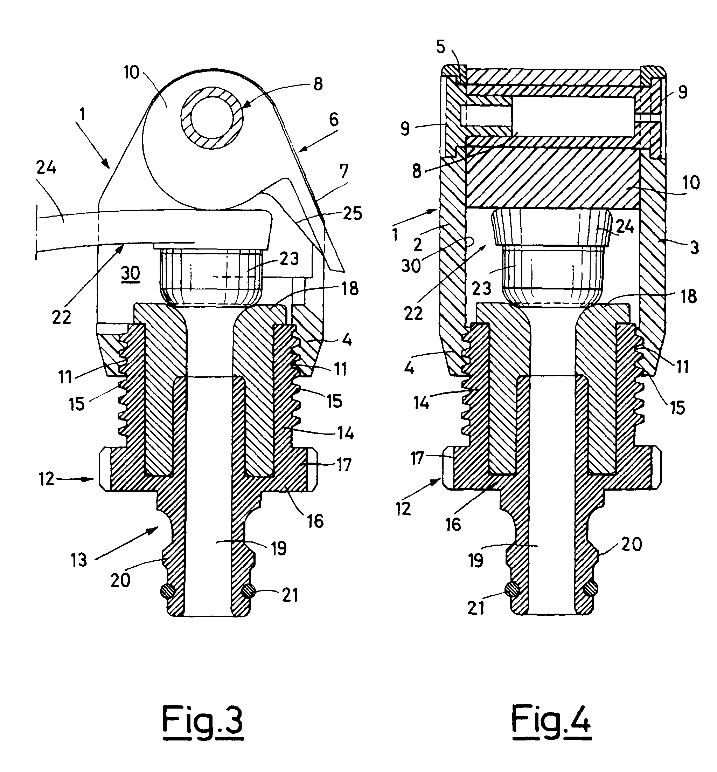

The tab 7 is constituted externally by a full flat surface, that protrudes tangentially from the lateral surface of the drum 10; but internally it has reliefs 25 corresponding to respective inlays 26 of the support casing 1, that act as a shoulder for the tab 7 and prevent its complete rotation beyond the closed position of Fig. 3.

The adapter according to the present invention also comprises a supporting structure 12 for supporting a drilled vertical tang 13, for connecting to a female coupling element. Said supporting structure 12 comprises an upper portion 14 having an almost cylindrical shape and provided with an external thread 15, for screwing into the thread 11. Said upper portion 14 is drilled internally and is integral with a lower portion 16 constituted by the tang 13 and by knurled ring 17 for effecting the rotation of the structure 12.

Inside the portion 14 there is fitted a seal 18, that covers the internal surface of the portion 14 reducing its diameter to that of the hole 19 passing through the tang 13.

Said tang 13 has an external shape 20, and a rubber ring 21, to ensure the connection with the female coupling element.

The adapter according to the invention is destined to be used as follows.

The operations of assemblying said adapter onto the tap unit 22 start with the introduction of the arm 24 of said unit 22 inside the receiving space 30 defined by the support casing 1, said introduction being effected so that the delivery nozzle 23 of said unit 22 is placed opposite the hole of the seal 18 (Fig.s 1 ,2).

The adapter is then fastened to the unit 22 by operating the tab 7 of the drum 6; in order to fasten the male coupling element it is necessary to rotate said drum 6 beyond the position of maximum eccentricity, that imposes the pressure engagement of the nozzle 23 with the seal 18. If the size of the arm 24 is too large or too small for the position of stable equilibrium of the drum 6 to be reached, it is necessary to increase or decrease the volume of the receving space 30 by operating on the supporting structure 12 of the tang 13 that, as has already been highlighted, being provided with a thread, is movable in the direction parallel to the axis of the tang 13.

At this point it is possible to fasten to the adapter, which forms a male coupling element, a corresponding female coupling element, in turn fastened to an irrigation hose.

## Claims

1. Adapter for water connecting an irrigation hose to a water tap outlet having a flattened terminal part with a flat top and a vertical-axis delivery mouth, comprising a support casing (1) passed through by a transversal hole which defines a space (30) for receiving said flattened terminal part (24) of the water outlet (22), said space (30) being limited at a lower end by a tang (13) passed through by a longitudinal hole (19) and provided with an annular seal (21) for connecting the adapter to a female coupling element and at an upper end by a pressure clamping means (6) constituted by an eccentric drum (10) rotatable about a horizontal rotation axis for clamping the support casing (1) under pressure onto said terminal part (24) of the water outlet (22), characterized in that said tang (13) is formed in a structure (12) which comprises a first hollow portion (14) provided with an external thread (15) engaged with an internal thread (11) at the lower end of said support casing (1), and a second portion (16) integral with said first portion (14) and constituted by said tang (13) and by a ring (17) for the rotation of the structure (12), said first portion (14) having a cylindrical internal space filled with an internal seal (18) passed through by a longitudinal hole aligned with said longitudinal hole (19) of the tang (13) whereby rotation of said ring (17) serves to adjust the distance between the top of the tang structure (12), which seals against the water tap outlet (22), and the eccentric drum (10), said eccentric drum (10) having its rotation axis in the same vertical plane as the longitudinal axis of the longitudinal hole (19) of the tang (13).

2. Adapter according to claim 1, characterized in that said drum (10) has an eccentricity in the direction of movement of said tang (13) which increases with the angle of rotation of said drum (10) from an open position to a position of maximum eccentricity corresponding to the minimum height of said receiving space (30), said drum having a closed position located beyond said position of maximum eccentricity in the closing movement direction of said drum (10).

3. Adapter according to claim 1, characterized in that said hollow support casing (1) has lateral surfaces (2, 3) provided with inlays (26) that act as a positioning shoulder for corresponding reliefs (25) on a tab (7) integral with said drum (10) and suitable for operating the rotation of the same.

## Patentansprüche

1. Adapter zur wasserleitenden Verbindung eines Bewässerungsschlauches mit einem Wasserhahnauslaß, welcher ein abgeflachtes Anschlußteil mit einer ebenen Oberseite und eine Abgabeöffnung in einer vertikalen Achse hat, welcher ein Traggehäuse (1) aufweist, welches durch eine Transversalöffnung geht, welche einen Raum (30) zur Aufnahme des abgeflachten Anschlußteiles (24) des Wasserauslasses (22) bildet, wobei der Raum (30) am unteren Ende durch einen Schaft (13) begrenzt wird, durch welchen eine Längsöffnung (19) geht, und der mit einer Ringdichtung (21) zum Verbinden des Adapters mit einem Aufnahmeverbindungselement versehen ist, und an einem oberen Ende eine Druckklemmeinrichtung (6) aufweist, welche von einer Exzentertrommel (10) gebildet wird, die um eine horizontale Drehachse drehbar ist und die das Traggehäuse (1) unter Druckbeaufschlagung auf das Anschlußteil (24) des Wasserauslasses (22) spannt, **dadurch gekennzeichnet**, daß der Schaft (13) eine Konstruktion (12) hat, welche einen ersten hohlen Abschnitt (14) aufweist, welcher mit einem Außengewinde (15) versehen ist, welches in Kämmeingriff mit einem Innengewinde (11) am unteren Ende des Traggehäuses (1) ist, und einen zweiten Abschnitt (16) aufweist, welcher integral mit dem ersten Abschnitt (14) ausgebildet ist, und von dem Schaft (13) sowie von einem Ring (17) zur Drehbewegung der Konstruktion (12) gebildet wird, daß der erste Abschnitt (14) einen zylindrischen Innenraum hat, welcher mit einer Innendichtung (18) ausgefüllt ist, durch welche eine Längsöffnung geht, die zur Längsöffnung (19) des Schafts (13) fluchtet, wobei die Drehbewegung des Rings (17) zur Einstellung des Abstandes zwischen der Oberseite der Schaftkonstruktion (12), welche gegenüber dem Wasserhahnauslaß (22) abgedichtet ist und der exzentrischen Trommel (10) dient, wobei die exzentrische Trommel (10) eine Drehachse in derselben vertikalen Ebene wie die Längsachse der Längsöffnung (19) des Schafts (13) hat.

2. Adapter nach Anspruch 1, **dadurch gekennzeichnet**, daß die Trommel (10) eine Exzentrizität in Bewegungsrichtung des Schafts (13) hat, welche mit dem Drehwinkel der Trommel (10) ausgehend von einer Öffnungsstellung zu einer Stellung mit einer maximalen Exzentrizität entsprechend der minimalen Höhe des Aufnahmeraums (30) größer wird, und daß die Trommel eine Schließstellung hat, welche über die Position der maximalen Exzentrizität in Schließbewegungsrichtung der Trommel (10) hinausghend liegt.

3. Adapter nach Anspruch 1, **dadurch gekennzeichnet**, daß das hohle Traggehäuse (1) Seitenflächen (2, 3) hat, welche mit Einlagen (26) versehen sind, welche als eine Positionierschulter für zugeordnete Rippen (25) an einem Vorsprung (7) wirken, welche integral mit der Trommel (10) ausgebildet ist, und zum Verdrehen derselben betätigbar ist.

## Revendications

1. Adaptateur à eau servant à raccorder un tuyau d'arrosage à un bec de sortie d'eau du robinet qui possède une partie terminale aplatie munie d'une face supérieure plate et d'une bouche de sortie à axe vertical, comprenant un boîtier support (1) traversé d'un trou transversal qui définit un espace (30) destiné à recevoir ladite partie terminale aplatie (24) du bec de sortie d'eau (22), ledit espace (30) étant limité, à une extrémité inférieure, par une queue (13) traversée par un trou longitudinal (19), munie d'une garniture d'étanchéité annulaire (21) et destinée à raccorder l'adaptateur à un élément d'accouplement femelle, et, à une extrémité supérieure, par un moyen de serrage à pression (6) constitué par un tambour excentrique (10) qu'on peut faire tourner autour d'un axe de rotation horizontal pour serrer le boîtier support (1) sous pression sur ladite partie terminale (24) du bec de sortie d'eau (22), caractérisé en ce que ladite queue (13) est formée dans une structure (12) qui comprend une première portion creuse (14) munie d'un filetage extérieur (15) en prise avec un filetage intérieur (11) prévu à l'extrémité inférieure dudit boîtier support (1), et une deuxième portion (16) d'une seule pièce avec ladite première portion (14) et constituée par ladite queue (13) et par une bague (17) prévue pour faire tourner la structure (12), ladite première portion (14) ayant un espace intérieur cylindrique rempli par une garniture d'étanchéité intérieure (18) elle-même traversée par un trou longitudinal aligné avec ledit trou longitudinal (19) de la queue (13), de sorte que la rotation de ladite bague (17) sert à ajuster la distance entre le sommet de la structure de queue (12), qui s'appuie à joint étanche contre le bec de sortie d'eau du robinet (22), et le tambour excentrique (10), ledit tambour excentrique (10) ayant son axe de rotation dans le même plan vertical que l'axe longitudinal du trou longitudinal (19) de la queue (13).

2. Adaptateur selon la revendication 1, caractérisé en ce que ledit tambour (10) a une excentricité dans la direction du mouvement de ladite queue (13) qui croît avec l'angle de rotation dudit tambour (10), depuis une position ouverte jusqu'à une position d'excentricité maximum qui correspond à la hauteur minimum dudit espace récepteur (30), ledit tambour (10) pouvant prendre une position fermée située au-delà de ladite position d'excentricité maximum dans le sens du mouvement de fermeture dudit tambour (10).

3. Adaptateur selon la revendication 1, caractérisé en ce que ledit boîtier support creux (1) possède des surfaces latérales (2, 3) munies d'insertions (26) qui se comportent comme un épaulement de positionnement pour des évidements correspondants (25) prévus sur une patte (7) venue d'une seule pièce avec ledit tambour (10) et appropriée pour actionner la rotation de ce tambour.
